# EUROPÄISCHE PATENTSCHRIFT

(11) **EP 2 200 859 B1**
(45) Veröffentlichungstag und Bekanntmachung des Hinweises auf die Patenterteilung: **21.08.2013**
(21) Anmeldenummer: 08841668.0
(22) Anmeldetag: 16.10.2008
(51) Int. Cl.: B60K 37/06

(54) **VERFAHREN ZUM BETRIEB EINES DIALOGSYSTEMS FÜR EIN KRAFTFAHRZEUG**
METHOD FOR OPERATING A DIALOGUE SYSTEM IN A MOTOR VEHICLE
PROCEDE DE FONCTIONNEMENT D'UN SYSTEME DE DIALOGUE POUR VEHICULE A MOTEUR

(30) Priorität: 25.10.2007 DE 102007051013
(43) Veröffentlichungstag der Anmeldung: 30.06.2010
(73) Patentinhaber: Bayerische Motoren Werke Aktiengesellschaft, 80809 München (DE)
(72) Erfinder: KUENZNER, Hermann, 85356 Freising (DE)
(74) Vertreter: Kammermeier, Peter Frank
(86) Internationale Anmeldenummer: PCT/EP2008/008744
(87) Internationale Veröffentlichungsnummer: WO 2009/052985

(56) Entgegenhaltungen:
- DE-A1- 10 237 725
- DE-A1-102004 058 954

## Beschreibung

Die Erfindung betrifft ein Verfahren zum Betrieb eines Dialogsystems für ein Kraftfahrzeug mit einer Mehrzahl von Bedientasten, von denen zumindest eine mit mehreren Funktionen einer hierarchischen Menüstruktur belegbar ist.

Es ist bekannt, Bedientasten im Innenraum von Kraftfahrzeugen vorzusehen, durch welche bestimmte Funktionen sehr schnell und einfach ausgelöst werden können. Unter anderem aus Design- und Kostengründen ist die Anzahl solcher Bedientasten jedoch in engen Grenzen zu halten.

Zur Reduktion der Tastenanzahl ist aus der DE 38 36 555 A1 die Möglichkeit zur Bedienung einer Mehrzahl von in eine Menüstruktur integrierten Funktionen mittels einer multifunktionalen Bedieneinheit, die als Dreh-/Drucksteller ausgebildet sein kann, bekannt. Auch bei solchen Dialogsystemen bleiben bestimmte Funktionen aber typischerweise zusätzlich oder ausschließlich über Bedientasten bedienbar.

Ferner ist zur Reduktion der Anzahl von Bedientasten eine Verwendung einzelner Bedientasten für jeweils mehrere Funktionen bekannt. Beispielsweise ist es bekannt, ein Dialogsystem herstellerseitig so zu konfigurieren, dass eine bestimmte Bedientaste im Radio-Betrieb als Stationstaste für einen Radiosender dient, während sie im Audio-CD-Betrieb zur Auswahl einer von mehreren CDs dient. Solche herstellerseitig konfigurierten Dialogsystem werden jedoch nur selten den Nutzungsgewohnheiten und Vorlieben aller Bediener gerecht.

Es ist eine Aufgabe der Erfindung, ein gattungsgemäßes Verfahren zu schaffen, das eine Berücksichtigung der Nutzungsgewohnheiten und/oder Vorlieben eines Bedieners erlaubt.

Gelöst wird diese Aufgabe durch ein Verfahren mit den Merkmalen des Anspruchs 1. Vorteilhafte Ausführungsformen und Weiterbildungen der Erfindung ergeben sich aus den abhängigen Ansprüchen.

Durch die Erfindung wird einem Bediener die Möglichkeit gegeben, seine persönlichen Nutzungsgewohnheiten und Vorlieben durch eine geeignete Tastenbelegung zu unterstützen. Gleichzeitig wird die Anzahl erforderlicher Bedientasten durch die erfindungsgemäße Mehrfachbelegung gering gehalten bzw. reduziert.

Um den Nutzungsgewohnheiten und Vorlieben eines Bedieners verbessert gerecht zu werden, war es bereits zuvor, beispielsweise aus der die Merkmale des Oberbegriffs des Anspruchs 1 beinhaltenden DE 10 2004 058 954 A1 bekannt, eine freie Belegung von Bedientasten durch einen Bediener zuzulassen. Bei solchen frei belegbaren Bedientasten wurde eine Mehrfachbelegung bisher jedoch gezielt vermieden, insbesondere um eine Verwirrung des Bedieners zu vermeiden. Für die meisten Bediener wäre es nämlich irritierend, wenn eine zuvor selbst vorgenommene Tastenbelegung zu einem späteren Zeitpunkt plötzlich nicht mehr zur Verfügung stünde und bei Betätigung der Bedientaste unerwartet eine andere Funktion ausgeführt würde. Zudem ist es bei der Mehrzahl der bekannten Dialogsystemen durchaus erwünscht, dass eine Funktion, mit der eine Bedientaste belegt wurde, in sämtlichen Dialogzuständen des Systems zur Verfügung steht. Beispielsweise soll die Zielführung zu einer Navigationsadresse auch dann bzw. gerade dann auslösbar sein, wenn sich der Bediener aktuell nicht in einem Navigationsmenü befindet, denn so ergibt sich die größte Zeitersparnis für den Bediener.

Die Erfindung sieht eine Abkehr von diesem Paradigma vor. Eine Mehrfachbelegung frei belegbarer Bedientasten soll möglich sein, allerdings nur mit ganz bestimmten untereinander in Bezug stehenden Funktionen. Zudem soll die Belegung aus Sicht des Bedieners in besonders einfacher Art und Weise erfolgen.

Eine Mehrfachbelegung frei belegbarer Bedientasten ist erfindungsgemäß mit solchen Funktionen der Menüstruktur des Dialogsystems möglich, die einer mehrere Funktionen umfassenden Funktionsgruppe zugeordnet sind. Die entsprechende Zuordnung bestimmter Funktionen der Menüstruktur zu den Funktionsgruppen erfolgt vorzugsweise bereits herstellerseitig bzw. im Entwicklungsprozess.

Solche Funktionsgruppen umfassen typischerweise eng miteinander verwandte Funktionen. Die Verwandtschaft kann insbesondere darin bestehen, dass die Funktionen zueinander invers sind, d.h. dass die Ausführung einer Funktion das Ergebnis der Ausführung einer anderen Funktion derselben Funktionsgruppe aufhebt oder rückgängig macht. Beispielsweise kann eine auf ein mit dem Dialogsystem gekoppeltes Nutzsystem bezogene Einschaltfunktion und die zugehörige auf dasselbe Nutzsystem bezogene Ausschaltfunktion einer Funktionsgruppe angehören. Ein anderes Beispiel für potenzielle Mitglieder einer Funktionsgruppe sind verschiedene Einstellfunktionen zur Einstellung ein- und desselben Nutzparameters.

Welche der Funktionen in der aktuellen Situation einzusetzen ist, wird erfindungsgemäß in Abhängigkeit von einem Betriebszustand eines mit dem Dialogsystem gekoppelten Nutzsystems entschieden, vorzugsweise in Abhängigkeit von einem Betriebszustand eines Nutzsystems, auf das sich sämtliche Funktionen der Funktionsgruppe beziehen. Ein solcher Betriebszustand kann der Einschaltzustand des Nutzsystems sein.

Besonders einfach aus Sicht des Bedieners wird die Belegung einer Bedientaste mit mehreren Funktionen erfindungsgemäß dadurch, dass die Bedientaste automatisch mit sämtlichen Funktionen belegt wird, die einer Funktionsgruppe zugeordnet sind, wenn der Bedientaste durch eine Bedienhandlung des Bedieners eine der dieser Funktionsgruppe zugeordneten Funktionen zugewiesen wird. Es genügt also eine einzige Zuweisung für die Zuordnung aller Mitglieder der Funktionsgruppe.

Die Zuweisung der einzigen Funktion, die der Bedientaste erfindungsgemäß zugewiesen werden muss, kann beispielsweise in an sich bekannter Art und Weise erfolgen, indem die Bedientaste vom Bediener langanhaltend gedrückt wird, während die Funktion ausgeführt wird und/oder während ein die Funktion betreffender Menüeintrag ausgewählt ist, beispielsweise durch einen Cursor oder ein ähnliches Auswahlelement.

Vorzugsweise erfolgt nach der Belegung die Auswahl, welche der Funktionen, mit denen die Bedientaste belegt ist, bei Betätigung der Bedientaste ausgeführt wird, ausschließlich in Abhängigkeit von Betriebszuständen des mit dem Dialogsystem gekoppelten Nutzsystems, also unabhängig von anderen Einflüssen. Insbesondere erfolgt die Auswahl vorzugsweise unabhängig vom Dialogzustand des Dialogsystems. Es spielt dann beispielsweise keine Rolle, ob sich der Bediener aktuell in einem Radio-Menü oder einem Navigations-Menü befindet. Eine Betätigung der Bedientaste führt unabhängig hiervon zur Ausführung einer Funktion, die ausschließlich abhängt von dem genannten Betriebszustand des Nutzsystems. Ist eine Bedientaste bei solcher Ausführung der Erfindung beispielsweise mit der Einschaltung bzw. Ausschaltung der Auswertung von Traffic-Programme-Signalen (TP) belegt, so kann diese Ein- bzw. Ausschaltung auch dann jederzeit mittels der Bedientaste vorgenommen werden, wenn sich der Bediener aktuell in einem Navigationsmenü befindet. Es hängt ausschließlich davon ab, ob die Auswertung von TP-Signalen aktuell aktiviert oder deaktiviert ist, welche Funktion (Ausschaltung oder Einschaltung) ausgeführt wird.

Gemäß einer bevorzugten Ausführungsform der vorliegenden Erfindung ist zumindest eine der Bedientasten mit einer auf das Nutzsystem bezogenen Einschaltfunktion und einer dazu inversen Ausschaltfunktion derart belegbar, dass bei Betätigung der Bedientaste bei eingeschaltetem Nutzsystem die Ausschaltfunktion ausgeführt wird und dass bei Betätigung der Bedientaste bei ausgeschaltetem Nutzsystem die Einschaltfunktion ausgeführt wird.

Vorzugsweise wird zur Umsetzung der genannten Zustandsabhängigkeit (Nutzsystem eingeschaltet vs. Nutzsystem ausgeschaltet) der aktuelle Einschaltzustand des mit dem Dialogsystem gekoppelten Nutzsystems auf Basis eines den Einschaltzustand umfassenden Zustandsmodells des Nutzsystems bestimmt. Es muss dann vom Dialogsystem keine tatsächliche Abfrage des Einschaltzustands des Nutzsystems vorgenommen werden. Als einfachstes denkbares Zustandsmodell genügt beispielsweise bereits ein bei dem Dialogsystem gepflegtes Zustands-Flag, das gesetzt wird, wenn die Einschaltfunktion ausgelöst wird und gelöscht wird, wenn die Ausschaltfunktion ausgeführt wird.

Gemäß anderer bevorzugter Varianten der vorliegenden Erfindung wird der aktuelle Betriebszustand des Nutzsystems jedoch tatsächlich durch das Dialogsystem von dem Nutzsystem abgefragt und/oder der aktuelle Betriebszustand wird eigenständig bzw. selbsttätig von dem Nutzsystem an das Dialogsystem übermittelt bzw. gemeldet. Diese Varianten sind insbesondere dann von Vorteil, wenn der aktuelle Betriebszustand des Nutzsystems durch das Dialogsystem nicht mit einfachen Mitteln modellbasiert bestimmbar ist, etwa weil er sich auch unabhängig von einer Betätigung der Bedientaste ändern kann.

Gemäß einer anderen bevorzugten Ausführungsform der vorliegenden Erfindung ist die zumindest eine Bedientaste derart mit einer Mehrzahl von Einstellungsfunktionen zur Einstellung eines Nutzparameters des Nutzsystems belegbar, dass bei Betätigung der Bedientaste, diejenige Einstellungsfunktion ausgeführt wird, die in einer Reihenfolge der Einstellungsfunktionen auf diejenige Einstellungsfunktion folgt, gemäß welcher der Nutzparameter aktuell eingestellt ist. Die Reihenfolge kann insbesondere auch zyklisch festgelegt sein, d.h. auf die letzte Einstellungsfunktion aus einer begrenzten Menge von Einstellfunktionen folgt wieder die erste (z.B. Funktion 1 - Funktion 2 - Funktion 3 - Funktion 4 - Funktion 1 - Funktion 2 - Funktion 3 - Funktion 4 - Funktion 1 - ...).

Die Reihenfolge kann insbesondere bei dem Dialogsystem abgespeichert sein. Sie kann sich bereits aus einer Art der Speicherung der Funktionen der Funktionsgruppe, welche vorzugsweise auch bei dem Dialogsystem erfolgt, ergeben. Insbesondere kann sich die Reihenfolge aus den Speicherorten der zu den einzelnen Funktionen der Funktionsgruppe gehörigen Daten in einer Speichereinheit des Dialogsystems ergeben. Es kann aber auch zusätzlich zu den Funktionen der Funktionsgruppe an sich eine Reihenfolge derselben bei dem Dialogsystem abgespeichert werden.

Vorzugsweise bestimmt bei dieser Ausführungsform der vorliegenden Erfindung das Dialogsystem die aktuelle Einstellung des Nutzparameters auf Basis eines Zustandsmodells des Nutzsystems, das Angaben zu dieser Einstellung umfasst. Es kann beispielsweise die zuletzt ausgeführte Einstellungsfunktion anhand einer auf die oben genannte Reihenfolge bezogenen Positionsnummer aus dem Zustandsmodell bestimmbar sein. Das Zustandsmodell kann dann wiederum sehr einfach sein, muss im einfachsten Fall nur die Positionsnummer der zuletzt ausgeführten Einstellungsfunktion sowie die genannte Reihenfolge umfassen. Sofern das Zustandsmodell korrekt initialisiert wird, genügen diese Angaben, um zu bestimmen, welche Einstellungsfunktion bei der nächsten Betätigung der Bedientaste auszuführen ist.

Besonders anschaulich ist der Fall der Belegung einer Bedientaste mit zwei unterschiedlichen Einstellungsfunktionen. Gemäß dieser bevorzugten Ausführungsform der vorliegenden Erfindung ist zumindest eine der Bedientasten mit einer ersten Einstellungsfunktion zur Einstellung eines Nutzparameters des Nutzsystems und einer zweiten Einstellungsfunktion zur Einstellung des Nutzparameters derart belegbar, dass bei Betätigung der Bedientaste, die zweite Einstellungsfunktion ausgeführt wird, wenn der Nutzparameter gemäß der ersten Einstellungsfunktion eingestellt ist, und dass bei Betätigung der Bedientaste die erste Einstellungsfunktion ausgeführt wird, wenn der Nutzparameter gemäß der ersten Einstellungsfunktion eingestellt ist. Diese bevorzugte Ausführungsform der Erfindung kann implementierungsseitig im Wesentlichen gehandhabt werden wie der oben beschriebene Fall der Mehrfachbelegung mit einer Einschaltfunktion und einer dazu inversen Ausschaltfunktion. Die Erfindung ist insbesondere vorteilhaft anwendbar im Zusammenhang mit einem Dialogsystem, bei dem die aktuelle Belegung der frei belegbaren Bedientasten auf eine Anforderungshandlung des Bedieners hin anzeigbar ist, insbesondere optisch anzeigbar ist. Die Anforderungshandlung kann beispielsweise in einer leichten Berührung der Bedientaste, in einem leichten Antippen der Bedientaste oder in einer Annäherung der Hand des Bedieners an die Bedientaste bestehen, wenn das Dialogsystem geeignet ist, eine solche Berührung, ein solches Antippen und/oder eine solche Annäherung zu detektieren.

Besonders vorteilhaft ist eine solche Anzeige der aktuellen Belegung derart, dass die Anzeige bei erfindungsgemäß mehrfach belegten Tasten einen Hinweis darauf umfasst, welche der Funktionen der Funktionsgruppe bei der nächsten Betätigung der Taste ausgeführt werden wird. Wenn die Funktionsgruppe also die Einschaltung und Ausschaltung der Auswertung von Traffic-Programme-Signalen (TP) umfasst enthält die Anzeige vorzugsweise die Information, ob TP-Signale durch eine Betätigung ausgeschaltet werden oder eingeschaltet werden.

Alternativ kann die Anzeige auch einen Hinweis darauf enthalten, welche der Funktionen der Funktionsgruppe sich aktuell wirksam auf das Nutzsystem auswirkt. Dies kann gleichbedeutend sein mit einer Anzeige des Betriebszustands des Nutzsystems, von dem abhängt, welche der Funktionen bei Betätigung der Bedientaste ausgeführt wird. Wenn die Funktionsgruppe also die Einschaltung und Ausschaltung der Auswertung von Traffic-Programme-Signalen (TP) umfasst enthält die Anzeige gemäß dieser Alternative die Information, ob TP-Signale aktuell ausgewertet werden.

Grundsätzlich kann eine solche Anzeige aber auch alleine auf Basis der Funktionsgruppe und ihrer Mitglieder erfolgen. Der Bediener kann auch so mit nützlicher Information bezüglich der Belegung der Bedientaste versorgt werden. Im obigen Fall kann also auch schlicht eine Information der Art "TP on/off' angezeigt werden.

Ist das Dialogsystem derart ausgebildet ist, dass zunächst auf eine erste Anforderungshandlung des Bedieners (beispielsweise eine Berührung einer Bedientaste) hin eine die Bedientaste betreffende Kurzinformation angezeigt werden kann und auf eine zweite Anforderungshandlung des Bedieners hin (beispielsweise Beibehalten der Berührung für 2 Sekunden) eine erweiterte Detail-Information, so kann als Kurzinformation eine Anzeige alleine auf Basis der Funktionsgruppe und ihrer Mitglieder ausgegeben werden (im obigen Beispiel z.B. "TP on/off'). Die Detail-Information hingegen kann vorteilhaft einen Hinweis darauf umfassen, welche der Funktionen der Funktionsgruppe bei der nächsten Betätigung der Taste ausgeführt werden wird und/oder welche der Funktionen der Funktionsgruppe sich aktuell wirksam auf das Nutzsystem auswirkt.

Sofern bei dem Dialogsystem der Betriebszustand des Nutzsystems nicht oder nur sehr langsam modellbasiert bestimmbar ist, kann insbesondere die Zeit zwischen der Anzeige der Kurzinformation und der Detail-Information zur Bestimmung des Betriebszustands genutzt werden.

Im Folgenden wird ein bevorzugtes Ausführungsbeispiel der Erfindung beschrieben. Daraus ergeben sich weitere Details, bevorzugte Ausführungsformen und Weiterbildungen der Erfindung.

Ein Kraftfahrzeug umfasst ein menübasiertes Dialogsystem, über welches ein Klimasystem, eine Stereoanlage mit Radio und anderen Audio-Quellen, ein Navigationssystem und ein Mobiltelefon steuerbar sind.

Die Bedienung des Dialogsystems kann wahlweise durch einen Dreh-/Drucksteller oder acht frei belegbare Bedientasten erfolgen. Ein Bildschirm stellt das jeweils aktuelle Menü als Liste der von diesem Menü aus erreichbaren Untermenüs und/oder der von dort auslösbaren Funktionen dar.

Mittels des Dreh-/Druckstellers kann der Bediener unter anderem ein als Cursor ausgebildetes Auswahlelement im aktuell angezeigten Menü verschieben.

Die Bedientasten sind in an sich bekannter Weise mit Navigationszielen, Telefonnummern, Radiosendern und Audio-Quellen belegbar.

Zudem sind Funktionsgruppen bei dem Dialogsystem hinterlegt. Ausschließlich für die Funktionen dieser Funktionsgruppen unterstützt das Dialogsystem eine Mehrfachbelegung der Bedientasten.

Drei der Funktionsgruppen seien exemplarisch genannt:
- Eine erste Funktionsgruppe umfasst die Einschaltung der Auswertung von Traffic-Programme-Signalen (TP) und die Ausschaltung der Auswertung von Traffic-Programme-Signalen.
- Eine zweite Funktionsgruppe umfasst die Aktivierung eines ersten Klimaregelungsprogramms, die Aktivierung eines zweiten Klimaregelungsprogramms und die Aktivierung eines dritten Klimaregelungsprogramms. Die drei Klimaregelungsprogramme schließen sich gegenseitig aus, bei Aktivierung eines der Programme wird ein aktuell ausgeführtes anders Klimaregelungsprogramm abgebrochen.
- Eine dritte Funktionsgruppe umfasst die Parametrierung der Kartenansicht des Navigationssystems als nordweisend und die Parametrierung der Kartenansicht des Navigationssystems als fahrtweisend.

Jede der Bedientasten kann vom Fahrer mit sämtlichen Funktionen der ersten Funktionsgruppe belegt werden, wenn sie langanhaltend gedrückt wird, während mittels des Cursors eine Funktion hervorgehoben ist, die sich auf die Ein- oder Ausschaltung der Auswertung von TP-Signalen bezieht.

Ist eine Bedientaste so mit sämtlichen Funktionen der ersten Funktionsgruppe belegt worden, so wird durch ihre Betätigung die Auswertung von TP-Signalen aktiviert, wenn diese aktuell deaktiviert ist, und sie wird deaktiviert, wenn sie aktuell aktiviert ist.

Jede der Bedientasten kann vom Fahrer mit sämtlichen Funktionen der zweiten Funktionsgruppe belegt werden, wenn sie langanhaltend gedrückt wird, während mittels des Cursors eine Funktion hervorgehoben ist, die sich auf die Aktivierung eines der drei Klimaregelungsprogramme bezieht.

Ist eine Bedientaste so mit sämtlichen Funktionen der zweiten Funktionsgruppe belegt worden, so wird durch ihre Betätigung das erste Klimaregelungsprogramm aktiviert, wenn zuvor keines der drei Klimaregelungsprogramme aktiviert war oder wenn zuvor das dritte Klimaregelungsprogramm aktiviert war, es wird das zweite Klimaregelungsprogramm aktiviert, wenn zuvor das erste Klimaregelungsprogramm aktiviert war, und es wird das dritte Klimaregelungsprogramm aktiviert, wenn zuvor das zweite Klimaregelungsprogramm aktiviert war.

Jede der Bedientasten kann vom Fahrer mit sämtlichen Funktionen der dritten Funktionsgruppe belegt werden, wenn sie langanhaltend gedrückt wird, während mittels des Cursors eine Funktion hervorgehoben ist, die sich auf die Parametrierung der Kartenansicht des Navigationssystems als nordweisend und die Parametrierung der Kartenansicht des Navigationssystems als fahrtweisend oder nordweisend bezieht.

Ist eine Bedientaste so mit sämtlichen Funktionen der dritten Funktionsgruppe belegt worden, so wird durch ihre Betätigung die Kartenansicht des Navigationssystems als nordweisend parametriert, wenn sie zuvor als fahrtweisend parametriert war, und sie wird als fahrtweisend parametriert, wenn sie zuvor als nordweisend parametriert war.

## Patentansprüche

1. Verfahren zum Betrieb eines Dialogsystems für ein Kraftfahrzeug mit einer Mehrzahl von Bedientasten, von denen zumindest eine mit mehreren Funktionen einer hierarchischen Menüstruktur belegbar ist,
**dadurch gekennzeichnet,**
**dass** die zumindest eine Bedientaste derart mit mehreren Funktionen einer hierarchischen Menüstruktur belegbar ist, dass bei Betätigung der Bedientaste in Abhängigkeit von einem Betriebszustand eines mit dem Dialogsystem gekoppelten Nutzsystems genau eine der mehreren Funktionen ausgeführt wird und
**dass** die Belegung der zumindest einen Bedientaste mit mehreren Funktionen erfolgt, indem bestimmte Funktionen der Menüstruktur einer mehrere Funktionen umfassenden Funktionsgruppe zugeordnet werden und
indem die Bedientaste mit sämtlichen Funktionen, die der Funktionsgruppe zugeordnet sind, belegt wird, wenn der Bedientaste durch eine Bedienhandlung des Bedieners eine der Funktionen, die der Funktionsgruppe zugeordnet sind, zugewiesen wird.

2. Verfahren nach Anspruch 1,
**dadurch gekennzeichnet,**
**dass** das Dialogsystem den Betriebszustand des Nutzsystems auf Basis eines den Betriebszustand umfassenden Zustandsmodells des Nutzsystems bestimmt.

3. Verfahren nach Anspruch 1,
**dadurch gekennzeichnet,**
**dass** das Dialogsystem den Betriebszustand des Nutzsystems durch Abfrage von dem Nutzsystem bestimmt.

4. Verfahren nach Anspruch 1,
**dadurch gekennzeichnet,**
**dass** das Nutzsystem den Betriebszustand selbsttätig an das Dialogsystem übermittelt.

5. Verfahren nach einem der Ansprüche 1 bis 4,
**dadurch gekennzeichnet,**
**dass** zumindest eine der Bedientasten mit einer auf das Nutzsystem bezogenen Einschaltfunktion und einer dazu inversen Ausschaltfunktion derart belegbar ist, dass bei Betätigung der Bedientaste bei eingeschaltetem Nutzsystem die Ausschaltfunktion ausgeführt wird und
**dass** bei Betätigung der Bedientaste bei ausgeschaltetem Nutzsystem die Einschaltfunktion ausgeführt wird.

6. Verfahren nach einem der Ansprüche 1 bis 4,
**dadurch gekennzeichnet,**
**dass** zumindest eine der Bedientasten mit einer Mehrzahl von Einstellungsfunktionen zur Einstellung des Nutzparameters derart belegbar ist,
**dass** bei Betätigung der Bedientaste, diejenige Einstellungsfunktion ausgeführt wird, die in einer bei dem Dialogsystem abgespeicherten Reihenfolge der Einstellungsfunktionen auf diejenige Einstellungsfunktion folgt, gemäß welcher der Nutzparameter aktuell eingestellt ist.

7. Verfahren nach einem der Ansprüche 1 bis 4,
**dadurch gekennzeichnet,**
**dass** zumindest eine der Bedientasten mit einer ersten Einstellungsfunktion zur Einstellung des Nutzparameters und einer zweiten Einstellungsfunktion zur Einstellung des Nutzparameters derart belegbar ist,
**dass** bei Betätigung der Bedientaste, die zweite Einstellungsfunktion ausgeführt wird, wenn der Nutzparameter gemäß der ersten Einstellungsfunktion eingestellt ist, und dass bei Betätigung der Bedientaste die erste Einstellungsfunktion ausgeführt wird, wenn der Nutzparameter gemäß der ersten Einstellungsfunktion eingestellt ist.

## Claims

1. A method for operating a dialog system for a motor vehicle having a plurality of operating keys, at least one of which can be assigned a plurality of functions of a hierarchical menu structure, **characterised in that** the at least one operating key can be assigned a plurality of functions of a hierarchical menu structure, in such a way that on actuation of the operating key, depending on an operating state of a use system coupled to the dialog system, precisely one of the plurality of functions is carried out and **in that** the assignment of a plurality of functions to the at least one operating key takes place **in that** specific functions of the menu structure are associated with a functional group comprising a plurality of functions and **in that** the operating key is assigned all the functions associated with the functional group when one of the functions associated with the functional group is allocated to the operating key by an operating action of the operator.

2. A method according to claim 1, **characterised in that** the dialog system determines the operating state of the use system on the basis of a state model, which comprises the operating state, of the use system.

3. A method according to claim 1, **characterised in that** the dialog system determines the operating state of the use system by querying the use system.

4. A method according to claim 1, **characterised in that** the use system automatically transmits the operating state to the dialog system.

5. A method according to any one of claims 1 to 4, **characterised in that** at least one of the operating keys can be assigned a switch-on function in relation to the use system and a switch-off function inverse thereto, such that on actuation of the operating key with the use system switched on, the switch-off function is executed and **in that** on actuation of the operating key with the use system switched off, the switch-on function is executed.

6. A method according to any one of claims 1 to 4, **characterised in that** at least one of the operating keys can be assigned a plurality of adjustment functions for adjusting the use parameter in such a way that on actuation of the operating key, that adjustment function is executed, which, in a sequence of adjustment functions stored in the dialog system, follows that adjustment function, according to which the use parameter is currently adjusted.

7. A method according to any one of claims 1 to 4, **characterised in that** at least one of the operating keys can be assigned a first adjustment function to adjust the use parameter and a second adjustment function to adjust the use parameter in such a way that on actuation of the operating key, the second adjustment function is executed when the use parameter is adjusted according to the first adjustment function, and **in that** on actuation of the operating key, the first adjustment function is executed when the use parameter is adjusted according to the first adjustment function.

## Revendications

1. Procédé de fonctionnement d'un système de dialogue d'un véhicule automobile comportant un ensemble de touches de service dont au moins l'une peut-être occupée par plusieurs fonctions d'une structure hiérarchisée de menu,
procédé **caractérisé en ce qu'**
au moins cette touche de service peut être occupée par plusieurs fonctions d'une structure hiérarchisée de menu de façon qu'en actionnant cette touche de service selon un état de fonctionnement d'un système utile couplé au système de dialogue, on exécute précisément l'une des différentes fonctions et **en ce que** l'occupation de cette touche de service avec plusieurs fonctions se fait en associant certaines fonctions de la structure de menu d'un groupe de fonctions comprenant plusieurs fonctions, et
- on occupe la touche de service avec toutes les fonctions associées au groupe de fonctions si par une manipulation effectuée par l'utilisateur sur la touche de service, attribue une fonction qui correspond au groupe de fonction.

2. Procédé selon la revendication 1,
**caractérisé en ce que**
le système de dialogue détermine l'état de fonctionnement du système utile en se fondant sur l'un des modèles d'état du système utile comprenant l'état de fonctionnement.

3. Procédé selon la revendication 1,
**caractérisé en ce que**
le système de dialogue détermine l'état de fonctionne du système utile en interrogeant le système utile.

4. Procédé selon la revendication 1,
**caractérisé en ce que**
le système utile transmet automatiquement l'état de fonctionne au système de dialogue.

5. Procédé selon l'une des revendications 1 à 4,
**caractérisé en ce qu'**
au moins l'une des touches de service peut être occupée par un ensemble de fonctions ou de réglages pour régler les paramètres utiles, de façon qu'en actionnant la touche de service, on exécute la fonction de réglage qui suit cette fonction de réglage dans la succession des fonctions de réglage mémorisées dans le système de dialogue, fonctions de réglages qui règlent actuellement le paramètre utile.

6. Procédé selon l'une des revendications 1 à 4,
**caractérisé en ce qu'**
au moins l'une des touches de service peut être occupée par plusieurs fonctions de réglage pour régler le paramètre utile, et
l'actionnement de la touche de service exécutera la fonction de réglage qui, pour une série de fonctions de réglage enregistrées dans le système de dialogue, suit la fonction de réglage qui règle actuellement le paramètre utile.

7. Procédé selon l'une des revendications 1 à 4,
**caractérisé en ce qu'**
au moins l'une des fonctions de service peut être occupée par une première fonction de réglage pour régler le paramètre utile et par une seconde fonction de réglage pour régler le paramètre utile de façon qu'en actionnant la touche de service, la seconde fonction de réglage soit exécutée si le paramètre utile est réglé selon la première fonction de réglage et **en ce qu'**en actionnant la touche de service, on exécute la première fonction de réglage si le paramètre utile est réglé selon la première fonction de réglage.
